# EUROPEAN PATENT APPLICATION

(11) **EP 4 390 901 A1**
(43) Date of publication of application: **26.06.2024**
(21) Application number: 22911590.2
(22) Date of filing: 01.11.2022
(51) Int. Cl.: G09F 19/12, G09F 9/33

(54) **DISPLAY DEVICE**

(30) Priority: 21.12.2021 KR 20210183550
(71) Applicant: Samsung Electronics Co., Ltd., Suwon-si, Gyeonggi-do 16677 (KR)
(72) Inventor: IM, Sangkyun, Suwon-si Gyeonggi-do 16677 (KR); PARK, Jaehoo, Suwon-si Gyeonggi-do 16677 (KR); LEE, Joowhan, Suwon-si Gyeonggi-do 16677 (KR)
(74) Representative: Appleyard Lees IP LLP
(86) International application number: PCT/KR2022/016905
(87) International publication number: WO 2023/120952

(57) **Abstract**

The present disclosure relates to a display apparatus including a housing including a base, a rotating plate disposed on one side of the base, a substrate disposed on the rotating plate and on which inorganic light-emitting elements of a bar shape extending in a radial direction from a center of the rotating plate are mounted, and a wireless module provided in the housing, the wireless module being configured to transmit and receive power and data to control the inorganic light-emitting elements, wherein the wireless module includes a first coil, and a second coil disposed inside the first coil or to surround the first coil to generate an induced current due to the current flowing in the first coil.

## Description

### [TECHNICAL FIELD]

The present disclosure relates to a display apparatus, and more specifically, to a display apparatus including a wireless module.

### [BACKGROUND ART]

In general, a display apparatus, which is a type of output apparatus to convert obtained electrical information or stored electrical information into visual information and display the converted information to a user, is used in various fields such as homes and workplaces.

As such a display apparatus, there are a monitor device connected to a personal computer or a server computer, a portable computer device, a navigation terminal device, a general television device, an internet protocol television (IPTV) device, a smart phone, a tablet PC, a personal digital assistant (PDA), a portable terminal device such as a cellular phone, Various display apparatuses used to reproduce images such as advertisements or movies at industrial sites, various other types of audio/video system, and the like.

A display apparatus includes a light source device for converting electrical signals (regardless of whether it is a self-light emitting display or non-self-light emitting display) into visual signals, and the light source device includes a plurality of point light sources capable of independently emitting light. The light source includes, for example, a light emitting diode (LED) or an organic light emitting diode (OLED). Additionally, micro light-emitting diode (micro LED or µLED) panels, in which inorganic light-emitting elements are mounted on a substrate and the inorganic light-emitting elements themselves are used as pixels, have recently been studied as a new display panel. A micro light emitting diode display panel (hereinafter referred to as micro LED panel) is one of the flat display panels and is composed of a plurality of inorganic light emitting diodes (inorganic LEDs) each of 100 micrometers or less. These LED panels do not cause burn-in, and have excellent brightness, resolution, power consumption, and durability.

In current display apparatuses, images and/or videos that are displayed are standardized in a square shape, etc. Recently, there has been an attempt to increase commercial usability by outputting images and/or videos in various forms and allowing images to be viewed from various angles.

To this end, technologies that rotate light-emitting elements and implement displays as afterimages are developing, and there is a demand to more easily transmit and receive power and data in a rotating body.

### [DISCLOSURE]

### [TECHNICAL PROBLEM]

The present disclosure is directed to providing a display apparatus capable of wirelessly transmitting and receiving power and data on a rotating structure.

The present disclosure is directed to providing a display apparatus with improved design and reduced material costs.

### [TECHNICAL SOLUTION]

An aspect of the present disclosure provides a display apparatus including a housing including a base, a motor coupled to the base, a rotating plate disposed on one side of the base, a substrate disposed on the rotating plate and on which inorganic light-emitting elements of a bar shape extending in a radial direction from a center of the rotating plate are mounted, and a wireless module provided in the housing, the wireless module being configured to transmit and receive power and data to control the inorganic light-emitting elements, wherein the wireless module includes a first coil, and a second coil disposed inside the first coil or to surround the first coil to generate an induced current due to the current flowing in the first coil.

The housing may include a coil fixing part provided to fix at least one of the first coil and the second coil to the base.

The coil fixing part may be a first coil fixing part, and the rotating plate may include a plate part, and a second coil fixing part provided to fix at least one of the first coil and the second coil to the rotating plate.

The first coil fixing part may protrude from the base toward the rotating plate so that the first coil is fixed to the housing.

The second coil fixing part may protrude from the plate part toward the base so that the second coil is fixed to the rotating plate.

The first coil and the second coil may have an annular shape, and the second coil may be disposed inside the first coil along a radial direction of the first coil to be surrounded by the first coil.

The base and the plate part may be spaced apart in one direction, and a thickness of the first coil along the one direction may be provided to be thicker than a thickness of the second coil along the one direction.

The wireless module may include a first printed circuit board disposed on the base, connected to the first coil and including a first communication circuit pattern, and a second printed circuit board connected to the second coil, disposed on the rotating plate to be spaced apart from the first printed circuit board, and including a second communication circuit pattern.

The first printed circuit board and the second printed circuit board may be disposed on a rotation axis of the rotating plate.

The first communication circuit pattern and the second communication circuit pattern may be spaced apart from the rotation axis of the rotating plate along the radial direction of the rotating plate.

The first communication circuit pattern may be spaced apart from the rotation axis of the rotating plate along a first direction, and the second communication circuit pattern may be spaced apart from the rotation axis of the rotating plate along a second direction different from the first direction.

The second printed circuit board may be disposed inside the second coil along the radial direction of the rotating plate, and the wireless module may further include a shielding member disposed inside the second coil to cover the second printed circuit board.

The second coil fixing part may include an extension portion extending from the plate part toward the base, and a protrusion portion provided at one end of the extension portion to be adjacent to the base and on which the second printed circuit board is disposed.

The protrusion portion may include a first surface provided to face the plate part, and a second surface provided on a side opposite to the first surface to face the base, and the second printed circuit board and the shielding member may be disposed on the second surface.

The second coil fixing part may include an extension portion extending from the plate part toward the base, and an accommodating space formed by the extension portion to accommodate the second printed circuit board.

The shielding member may be disposed within the accommodating space to cover the second printed circuit board.

Another aspect of the present disclosure provides a display apparatus including a base, a motor coupled to the base, a plurality of rotating plates including a first rotating plate connected to the motor and spaced apart from the base, a plurality of rotating plates including a second rotating plate disposed between the first rotating plate and the base, a plurality of first substrates of a bar shape on which inorganic light-emitting elements are mounted, respectively, coupled to the first rotating plates, and extending in a radial direction from centers of the first rotating plates, a plurality of second substrates of a bar shape coupled to the second rotating plates and extending in a radial direction from centers of the second rotating plates, and a wireless module disposed between the base and the rotating plate and configured to transmit and receive power and data to control the inorganic light-emitting elements, wherein the wireless module includes a first printed circuit board disposed on the base, a second printed circuit board disposed on the rotating plate, and a first coil disposed on the base to be connected to the first printed circuit board, and a second coil connected to the second printed circuit board and disposed on the rotating plate to generate an induced current due to a current flowing in the first coil.

The second coil may be disposed inside the first coil along the radial direction of the rotating plate, and the second printed circuit board may be disposed inside the second coil along the radial direction of the rotating plate.

The display apparatus may further include a first fixing protrusion protruding from the base toward the rotating plate so that the first coil is fixed to the base, and a second fixing protrusion protruding from the rotating plate toward the base so that the second coil is fixed to the rotating plate.

Another aspect of the present disclosure provides a display apparatus including a base, a housing including a first fixing protrusion protruding from the base, a motor coupled to the base, a rotating plate disposed on one side of the base and including a plate part and a second fixing protrusion protruding from the plate part, a substrate disposed on the rotating plate and on which inorganic light-emitting elements are mounted, and a wireless module disposed between the base and the rotating plate and configured to transmit and receive power and data to control the inorganic light-emitting elements, wherein the wireless module includes a first coil fixed to the first fixing protrusion, and a second coil fixed to the second fixing protrusion and accommodated inside the first coil to generate an induced current due to a current flowing in the first coil.

### [ADVANTAGEOUS EFFECTS]

One aspect of the present disclosure can provide a display apparatus capable of wirelessly transmitting and receiving power and data on a rotating structure by including a compact wireless module.

Another aspect of the present disclosure can provide a display apparatus capable of improving a design and reducing material costs due to a compact wireless module.

### [DESCRIPTION OF DRAWINGS]

FIG. 1 is a perspective view of a display apparatus according to an embodiment of the present disclosure.
FIG. 2 an exploded perspective view of the display apparatus according to an embodiment of the present disclosure.
FIG. 3 an exploded perspective view of the display apparatus according to an embodiment of the present disclosure.
FIG. 4 is a cross-sectional view of the display apparatus according to an embodiment of the present disclosure.
FIG. 5 is a view illustrating that an image and/or video is implemented in the display apparatus according to an embodiment of the present disclosure.
FIG. 6 is a perspective view of the display apparatus according to an embodiment of the present disclosure.
FIG. 7 is a perspective view of the display apparatus according to an embodiment of the present disclosure.
FIG. 8 is a view illustrating that an image and/or video is implemented in the display apparatus according to an embodiment of the present disclosure.
FIG. 9 is an enlarged view of the display apparatus according to an embodiment of the present disclosure.
FIG. 10 is an enlarged view of the display apparatus according to an embodiment of the present disclosure.
FIG. 11 is a schematic diagram of the display apparatus according to an embodiment of the present disclosure.
FIG. 12 is a schematic diagram of the display apparatus according to an embodiment of the present disclosure.
FIG. 13 is a schematic diagram of the display apparatus according to an embodiment of the present disclosure.
FIG. 14 is a schematic diagram of the display apparatus according to an embodiment of the present disclosure.
FIG. 15 is a schematic diagram of the display apparatus according to an embodiment of the present disclosure.
FIG. 16 is a schematic diagram of the display apparatus according to an embodiment of the present disclosure.
FIG. 17 is a schematic diagram of the display apparatus according to an embodiment of the present disclosure.
FIG. 18 is a perspective view of a shielding member in the display apparatus according to an embodiment of the present disclosure.
FIG. 19 is a schematic diagram of the display apparatus according to an embodiment of the present disclosure.
FIG. 20 is a schematic diagram of the display apparatus according to an embodiment of the present disclosure.
FIG. 21 is a schematic diagram of the display apparatus according to an embodiment of the present disclosure.

### [MODE OF THE DISCLOSURE]

The embodiments described in the present specification and the configurations shown in the drawings are only examples of preferred embodiments of the present disclosure, and various modifications may be made at the time of filing of the present disclosure to replace the embodiments and drawings of the present specification.

Like reference numbers or signs in the various drawings of the application represent parts or components that perform substantially the same functions.

The terms used herein are for the purpose of describing the embodiments and are not intended to restrict and/or to limit the present disclosure. For example, the singular expressions herein may include plural expressions, unless the context clearly dictates otherwise. The terms "comprises," "has," and the like are intended to indicate that there are features, numbers, steps, operations, components, parts, or combinations thereof described in the specification, and do not exclude the presence or addition of one or more other features, numbers, steps, operations, components, parts, or combinations thereof.

It will be understood that, although the terms "first," "second," etc. may be used herein to describe various components, these components should not be limited by these terms, and the terms are only used to distinguish one component from another. For example, without departing from the scope of the present disclosure, a first component may be referred to as a second component, and similarly, the second component may also be referred to as a first component. The term "and/or" includes any combination of a plurality of related items or any one of a plurality of related items.

In this specification, the terms "front," "rear," "left," "right," and the like used in the following description are defined with reference to the drawings, and the shape and position of each component are not limited by these terms.

A display apparatus 1 according to an embodiment of the present disclosure may process an image signal received from the outside and visually display the processed image. The display apparatus 1 may be used not only for personal use at home, but also for commercial use in businesses, etc. The display apparatus 1 may visually display commercial advertisements. The display apparatus 1 may be installed in various places. The display apparatus 1 may be installed in a place where many people come and go, such as rooftops of buildings, a bus stop, subway stations, shopping malls, movie theaters, companies, and stores.

The display apparatus 1 may receive content data including image signals, video signals, and/or audio signals from various content sources. Additionally, the display apparatus 1 may output images, video, and/or audio corresponding to image signals, video signals, and/or audio signals. For example, the display apparatus 1 may receive content data through a broadcast reception antenna or a wired cable, receive content data from a content playback device, or receive content data from a content provision server of a content provider.

Hereinafter, embodiments of the present disclosure will be described in detail with reference to the accompanying drawings.

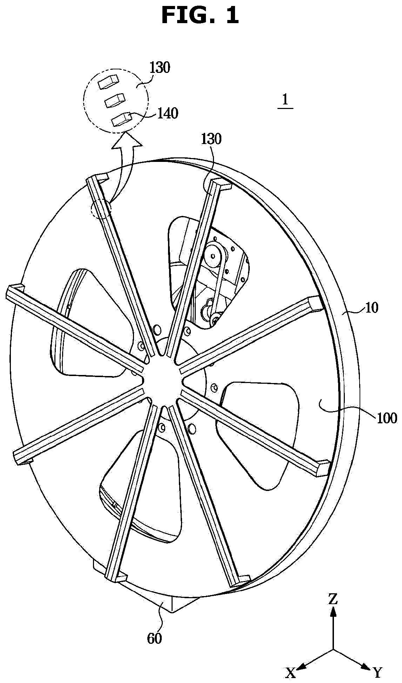

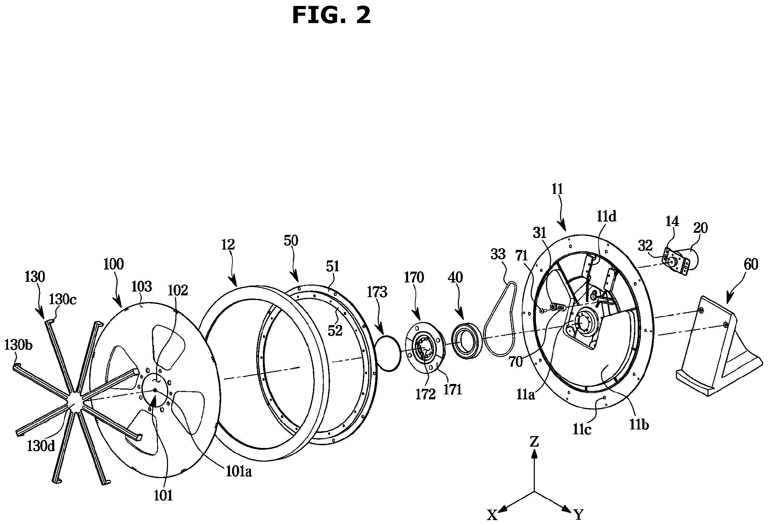

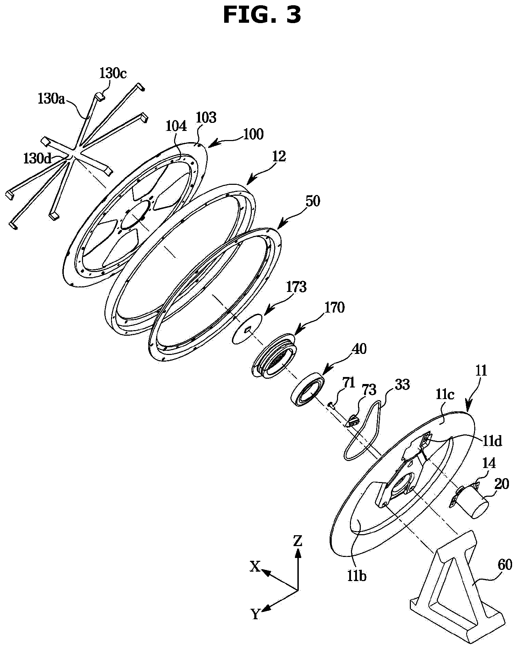

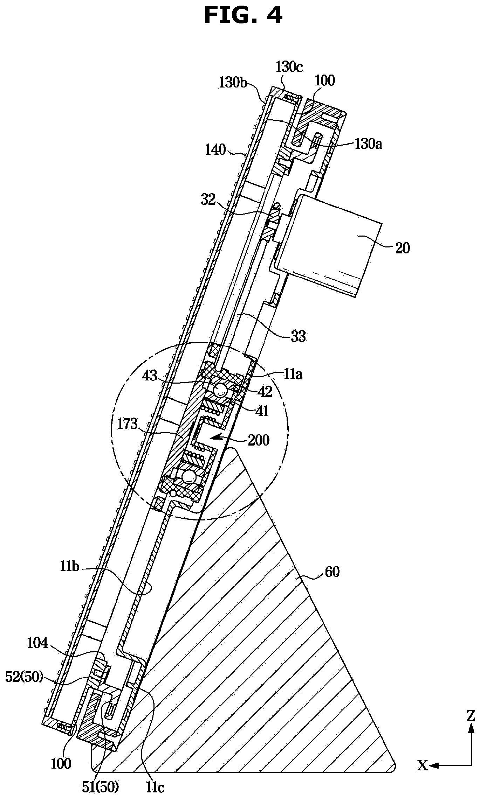

FIG. 1 is a perspective view of a display apparatus according to an embodiment of the present disclosure. FIG. 2 an exploded perspective view of the display apparatus according to an embodiment of the present disclosure. FIG. 3 an exploded perspective view of the display apparatus according to an embodiment of the present disclosure. FIG. 4 is a cross-sectional view of the display apparatus according to an embodiment of the present disclosure.

Referring to FIGS. 1 to 4, the display apparatus 1 according to an embodiment of the present disclosure may include a housing 10 and a display panel. The display panel may include a rotating plate 100 and components provided on the rotating plate 100. For example, the display panel may include the rotating plate 100, a substrate 130, and inorganic light-emitting elements 140.

The housing 10 may cover a circumference of the rotating plate 100. The housing 10 may support the rotating plate 100 and the substrate 130 so that images are stably implemented. The housing 10 may include a base 11 and a columnar housing 12.

The base 11 may be disposed on an -X direction (e.g., rear) side of the rotating plate 100 and the substrate 130 to support the rotating plate 100 and the substrate 130. The base 11 may be formed substantially in a disk shape. The base 11 may be coupled to the rotating plate 100 in various methods. The base 11 may be screw-coupled with a stand 60 and the columnar housing 12, respectively. However, the coupling method is not limited to the above example. The rotating plate 100 and a support plate 50 may be disposed in the front of the base 11, and the stand 60 may be coupled to the rear to support the display apparatus. The stand 60 may be disposed at the lowest position among the components of the display apparatus 1.

The base 11 may include a seating portion 11a, a step portion 11b, a circumferential portion 11c, and a motor coupling portion 11d.

The seating portion 11a may be provided in a central portion of the base 11. A rotating body 170 may be seated on the seating portion 11a. The seating portion 11a may be formed to have a step with the step portion 11b. The rotating body 170 may be stably seated on the base 11 by the seating portion 11a. The step portion 11b may protrude toward the rotating plate 100. The step portion 11b may be a protrusion 11b. The protrusion 11b may make the display apparatus 1 slimmer by reducing an unnecessary separation distance between the base 11 and the rotating plate 100. The circumferential portion 11c may form a circumference of the base 11. The circumferential portion 11c may be formed on a circumference of the step portion 11b. The base 11 may be coupled to other components of the display apparatus 1, such as the columnar housing 12, at the circumferential portion 11c. The motor coupling portion 11d may be formed to correspond to a coupling bracket 14 so that a motor 20 is coupled to the base 11. The motor 20 may be coupled to the coupling bracket 14 to rotate the rotating plate 100. The motor coupling portion 11d and the coupling bracket 14 may be coupled to each other.

The columnar housing 12 may cover a circumference of the display apparatus. The columnar housing 12 is coupled to the base 11 to accommodate components such as the rotating body 170, a bearing 40, and the support plate 50 within the housing 10. The columnar housing 12 may be formed substantially in a ring shape.

The rotating plate 100 may be disposed on one side of the base 11 and rotated in one direction. The rotating plate 100 may be rotated by receiving power from the motor 20. The substrate 130 coupled to the rotating plate 100 may also be rotated by rotation of the rotating plate 100. Because the inorganic light-emitting elements 140 are mounted on the substrate 130, an afterimage may remain as the substrate 130 rotates, and this may be used as a display.

The rotating plate 100 may be coupled to the support plate 50 and the rotating body 170. The rotating plate 100 may be coupled to the rotating body 170. Because the rotating body 170 is connected to the motor 20 through pulleys 31 and 32 and a belt 33, the rotating body 170 may transmit a driving force to the rotating plate 100. The driving force transmitted to the rotating plate 100 may rotate the rotating plate 100 and the substrate 130. The rotating plate 100 may be coupled to the rotating body 170 at a central portion 101 of the rotating plate 100.

The drawings illustrate that the rotating plate 100 and the rotating body 170 are provided separately, but the rotating body 170 may be provided integrally with the rotating plate 100. The rotating plate 100 may include the rotating body 170. Additionally, the rotating plate 100 may include a cover plate 173.

The rotating plate 100 may include the central portion 101, an opening 102, a circumferential portion 103, and a coupling portion 104. The coupling portion 104 may be coupled to a support portion 52 of the support plate 50. The circumferential portion 103 may form the circumference of the rotating plate 100. The circumferential portion 103 may be formed on a circumference of the coupling portion 104.

The substrate 130 may be rotated by being coupled to the rotating plate 100 on one side of the rotating plate 100 in one direction. The substrate 130 may extend from a central portion 130d along a radial direction of the rotating plate 100. The substrate 130 may include a bar shape. A plurality of the substrates 130 extending in the radial direction from the central portion 130d may be provided. The inorganic light-emitting elements 140 may be mounted on the substrate 130. Because the inorganic light-emitting elements 140 may emit light on their own without requiring a separate backlight unit (BLU), the display apparatus may be slimmed. The inorganic light-emitting elements 140 may receive image information from a communication module 202 and implement images and/or videos (displays). In this case, because the substrate 130 rotates quickly, a display due to afterimages may be implemented.

In other words, the light emitted by the inorganic light-emitting elements 140 may remain a visual afterimage on the user. Images may be created by light emitted from different positions as the substrate 130 rotates. The user may view an image that is a combination of afterimages of light continuously emitted from different positions.

The substrate 130 may include a first surface 130a, a second surface 130b, and a coupling rib 130c. The first surface 130a may be the surface 130a facing the rotating plate 100. The first surface 130a may face the rotating plate 100. The second surface 130b is disposed on the opposite side of the first surface 130a and the inorganic light emitting elements 140 may be mounted thereon. The substrate 130 may extend radially from the central portion 130d. The coupling rib 130c may extend from one end of the substrate 130 in the radial direction toward the rotating plate 100. The coupling rib 130c may be coupled to the rotating plate 100 at the circumferential portion 103 of the rotating plate 100. The coupling rib 130c may be screw-coupled to the rotating plate 100. Through this, the rotating plate 100 and the substrate 130 may rotate integrally.

The display apparatus 1 according to an embodiment of the present disclosure may further include the rotating body 170, the cover plate 173, the bearing 40, the motor 20, and the pulleys 31 and 32. The cover plate 173 may be a component included in the rotating body 170.

The rotating body 170 may be coupled to the rotating plate 100 to rotate the rotating plate 100. The rotating body 170 may be coupled to the rotating plate 100 at the central portion 101 of the rotating plate 100. The rotating body 170 may be connected to the motor 20 through the pulleys 31 and 32 and the belt 33. The rotating body 170 may receive power from the motor 20 and transfer the received power to the rotating plate 100. The rotating body 170 may include a body portion 171 and an opening 172 formed in a center of the body portion 171. A wireless module 200 may be disposed in the opening 172 of the rotating body 170.

The cover plate 173 may cover the opening 102 provided in the central portion 101 of the rotating plate 100. The cover plate 173 may also cover the opening 172 of the rotating body 170. Accordingly, the wireless module 200 disposed within the opening 172 of the rotating body 170 may be covered.

The bearing 40 may support the rotation of the rotating body 170. The bearing 40 may be the ball bearing 40. The bearing 40 may include an inner ring 41, an outer ring 42, and balls 43. The bearing 40 may be seated on the seating portion 11a of the base 11. The bearing 40 may be positioned between the base 11 and the rotating body 170. The bearing 40 may be coupled or fixed to the base 11 and the rotating body 170, respectively. The outer ring 42 of the bearing 40 may be coupled or fixed to the rotating body 170, and the inner ring 41 of the bearing 40 may be coupled or fixed to the base 11.

The motor 20 and the pulleys 31 and 32 may transfer power to the rotating body 170, the rotating plate 100, and the substrate 130. The pulleys 31 and 32 may include the first pulley 31 and the second pulley 32. The first pulley 31 may be coupled to the base 11 by a coupling part 70 and a fastening member 71, and the second pulley 32 may be coupled to the base 11 by a fastening bracket 14.

The display apparatus 1 according to an embodiment of the present disclosure may further include the support plate 50. The support plate 50 may include a support portion 52 and a circumferential portion 51. The support portion 52 may be coupled to the coupling part 104 of the rotating plate 100 to support the rotating plate 100. The circumferential portion 51 may be formed on an outer circumference from the support portion 52.

The display apparatus 1 according to an embodiment of the present disclosure may further include the wireless module 200. The wireless module 200 may be configured to transmit and receive power and data to control the inorganic light-emitting elements 140. The wireless module 200 may be provided within the housing 10.The wireless module 200 may be disposed between the cover plate 173 and the base 11. The wireless module 200 may also be positioned within the opening 172 of the rotating body 170. The wireless module 200 may be fixed or coupled to the rotating plate 100 and the base 11, respectively.

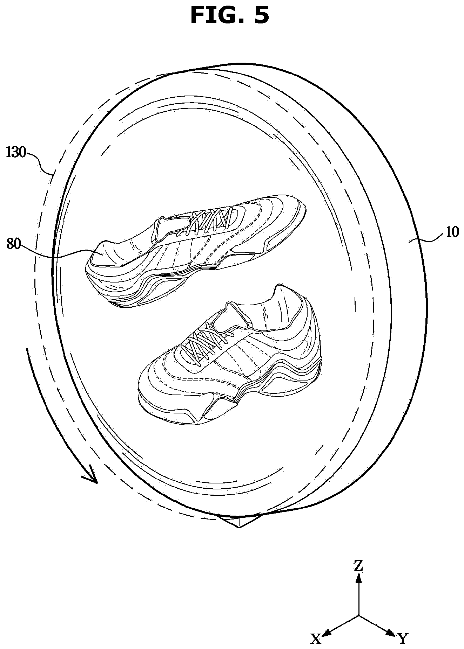

FIG. 5 is a view illustrating that an image and/or video is implemented in the display apparatus according to an embodiment of the present disclosure.

Referring to FIG. 5, according to an embodiment of the present disclosure, the display apparatus 1 may implement a display 80 through an afterimage as the rotating plate 100 and the substrate 130 on which the inorganic light-emitting elements 140 are mounted rotate. The image 80 and/or video 80 may be displayed on a rotation trajectory of the inorganic light-emitting elements 140 mounted on the substrate 130. The image 80 and/or video 80 according to an embodiment of the present disclosure may be the two-dimensional image 80.

According to an embodiment of the present disclosure, because the display 80 (image and/or video) is implemented as the rotating plate 100 and the substrate 130 of the display apparatus rotate, the display 80 may be implemented in various shapes, such as a circle, beyond the existing square shape. Additionally, because the display 80 is implemented by rotation, the inorganic light-emitting elements 140 do not need to be mounted in the entire display area, so that the number of the inorganic light-emitting elements 140 may be reduced. Accordingly, the material cost and production cost of the display apparatus 1 may be reduced.

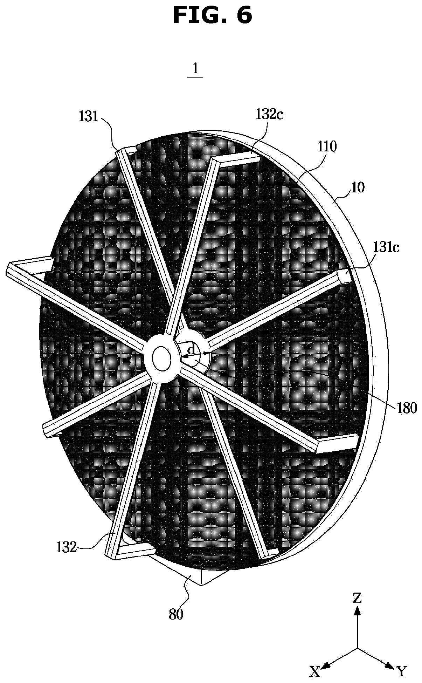

FIG. 6 is a perspective view of the display apparatus according to an embodiment of the present disclosure.

The same reference numerals are assigned to the same components as those in the above-described embodiment, and descriptions thereof may be omitted.

Referring to FIG. 6, the display apparatus 1 according to an embodiment may include the rotating plate 100, the plurality of substrates 130, and a connection frame 180. The rotating plate 100 is configured to have a darker color than other components to increase a contrast ratio of a display. In one embodiment, a separate dark plate is not provided, and the rotating plate 100 is provided in a darker color than other components. However, the present disclosure is not limited thereto, and a separate dark plate may be provided to increase the contrast ratio of the display.

The plurality of substrates 130 may include a first substrate 131 and a second substrate 132. The inorganic light-emitting elements 140 may be mounted on the first substrate 131 and the second substrate 132, respectively, to implement images. The first substrate 131 may be positioned adjacent to the rotating plate 100. The second substrate 132 may be spaced apart from the rotating plate 100 by a predetermined distance d in one direction more than the first substrate 131. The second substrate 132 may be spaced apart from the first substrate 131 by the predetermined distance d in one direction. The first substrate 131 may include a first coupling rib 131c coupled to the rotating plate 100, and the second substrate 132 may include a second coupling rib 132c coupled to the rotating plate 100. The first coupling rib 131c may extend from one end along a radial direction of the first substrate 131 toward the rotating plate 100. The second coupling rib 132c may extend from one end along a radial direction of the second substrate 132 toward the rotating plate 100. The second coupling rib 132c may be extended to be longer than the first coupling rib 131c.

The first substrate 131 and the second substrate 132 may be connected through the connection frame 180 at respective central portions thereof. Connection holes 131d and 132d may be formed at the central portions of the first substrate 131 and the second substrate 132, respectively. The connection frame 180 may connect the first substrate 131 and the second substrate 132 to all be rotated by the single motor 20. The connection frame 180 may extend along one direction. One end of the connection frame 180 may be coupled to the first substrate 131, and the other end may be coupled to the second substrate 132. The separation distance d between the first substrate 131 and the second substrate 132 may be equal to a length of the connection frame 180. The length of the connection frame 180 between the first substrate 131 and the second substrate 132 may be variable.

Although not shown, the display apparatus may further include a polarizing cover. The polarizing cover may be disposed on one sides of the rotating plate 100 and the substrate 130 in one direction to cover the rotating plate 100 and/or the substrate 130. For example, the polarizing cover may be disposed on a side where the image is implemented from the substrate 130. When viewed from the outside of the display apparatus, the polarizing cover blocks the reflection of light emitted from the inorganic light-emitting elements 140 while preventing the rotating plate 100 and substrate 130 covered by the polarizing cover from being visible, thereby enabling images of clearer image quality to be implemented.

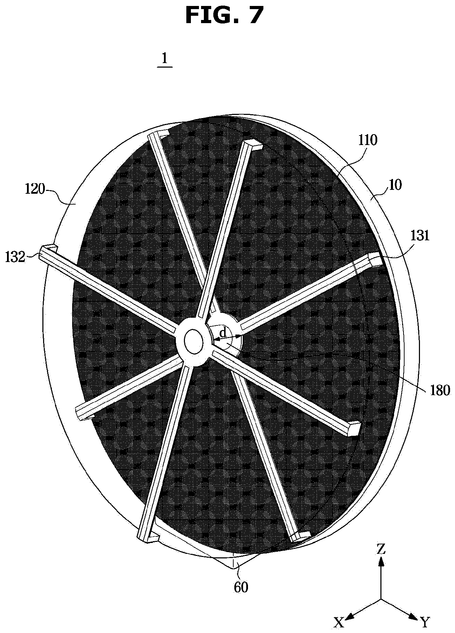

FIG. 7 is a perspective view of the display apparatus according to an embodiment of the present disclosure.

Referring to FIG. 7, the display apparatus 1 according to an embodiment of the present disclosure may include a plurality of rotating plates 110 and 120 and the plurality of substrates 130. The plurality of rotating plates 110 and 120 may include the first rotating plate 110 and the second rotating plate 120. The plurality of substrates 130 may include the first substrate 131 and the second substrate 132. The plurality of rotating plates 110 and 120 and the plurality of substrates 130 may be disposed on one side of the base 11.

The first substrate 131 may be coupled to the first rotating plate 110. The first substrate 131 may be coupled to the first rotating plate 110 to be rotated together with the first rotating plate 110. The second substrate 132 may be coupled to the second rotating plate 120. The second substrate 132 may be rotated together with the second rotating plate 120. The first substrate 131 and the second substrate 132 may be connected to each other through the connection frame 180. The connection frame 180 may pass through a connection hole (not shown) of the first substrate 131 and a connection hole (not shown) of the second substrate 132. The length of the connection frame 180 between the first substrate 131 and the second substrate 132 may be variable.

The wireless module 200 may be fixed or coupled to the second rotating plate 120 and the base 11, respectively.

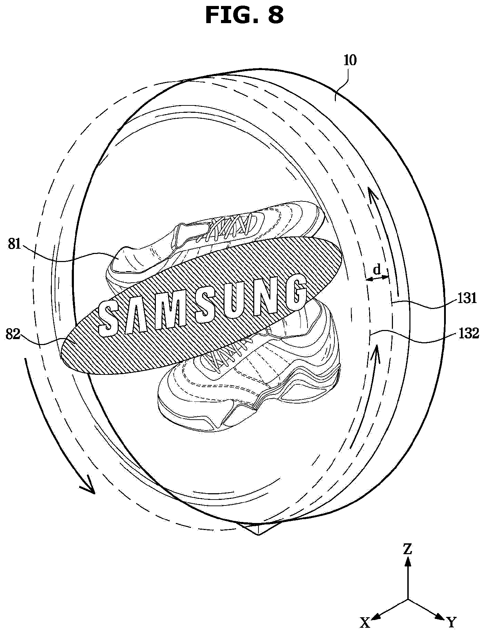

FIG. 8 is a view illustrating that an image and/or video is implemented in the display apparatus according to an embodiment of the present disclosure.

Referring to FIG. 8, the display apparatus 1 may implement displays 81 and 82 (images and/or videos) through afterimages as the rotating plate 100 and the substrate 130 on which the inorganic light emitting elements 140 are mounted rotate. For example, the displays may be displayed on a rotation trajectory of the inorganic light-emitting elements 140 mounted on the substrate 130. The images 81 and 82 and/or the videos 81 and 82 according to an embodiment of the present disclosure may be three-dimensional images.

Specifically, as the first rotating plate 110 and the first substrate 131 rotate, the first image 81 may be implemented, and as the second rotating plate 120 and the second substrate 132 rotate, the second image 82 may be implemented. Because the first substrate 131 and the second substrate 132 are spaced apart by the separation distance d, the first image 81 and the second image 82 may be spaced apart from each other. The separation distance d between the first image 81 and the second image 82 may vary depending on the length of the connection frame 180. By adjusting the separation distance d between the first image 81 and the second image 82, a more stereoscopic three-dimensional image may be implemented.

According to another embodiment of the present disclosure, the displays 81 and 82 are implemented as the rotating plates 110 and 120 and the substrate 130 of the display apparatus rotate, the displays 81 and 82 may be implemented in various shapes, such as a circle, beyond the existing square shape. Additionally, because the displays 81 and 82 are implemented by rotation, the inorganic light-emitting elements 140 do not need to be mounted in the entire display area, so that the number of the inorganic light-emitting elements 140 may be reduced. Accordingly, the material cost and production cost of the display apparatus 1 may be reduced.

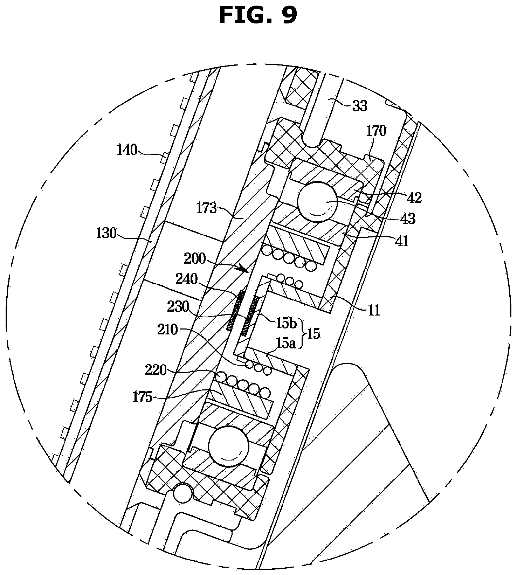

FIG. 9 is an enlarged view of the display apparatus according to an embodiment of the present disclosure.

Referring to FIG. 9, the display apparatus according to an embodiment of the present disclosure may include the wireless module 200. The wireless module 200 may transmit and receive power and data to control the inorganic light-emitting elements 140. The wireless module 200 may be disposed within the housing 10.

The wireless module 200 may include a first coil 210, a second coil 220, a first printed circuit board 230, and a second printed circuit board 240.

The first coil 210 may be disposed inside the second coil 220 along a radial direction R. The first coil 210 may receive a current. When the current flows in the first coil 210, an induced current may be generated in the adjacent second coil 220. The first coil 210 may be fixed to the housing 10. The first coil 210 may be fixed to the base 11 by a first coil fixing part 15 protruding from the base 11. The first coil 210 may be disposed on the rotating plate 100 or on the outside of the first coil fixing part 15 along the radial direction R of the coils 210 and 220. The radial direction R of the coils 210 and 220 may be the radial direction R of the rotating plate 100.

The second coil 220 may be disposed outside the first coil 210 along the radial direction R. When a current is applied to the first coil 210, an induced current may be generated in the second coil 220. The second coil 220 may be fixed to the rotating plate 100. The second coil 220 may be fixed to the rotating plate 100 by a second coil fixing part 175 protruding from the cover plate 173. The second coil 220 may be disposed on the rotating plate 100 or on the inside of the second coil fixing part 175 along the radial direction R of the coils 210 and 220.

An induced current is generated in the second coil 220 due to the first coil 210, and the induced current may cause current to flow in components or parts such as the inorganic light-emitting elements 140. Therefore, an image may be generated by emitting light from the inorganic light-emitting elements 140 rotating through the induced current.

The first printed circuit board 230 may be connected to the first coil 210. The first printed circuit board 230 may be electrically and/or physically connected to the first coil 210. The first printed circuit board 230 may transmit and receive data with the second printed circuit board 240. The first printed circuit board 230 may transmit data to the second printed circuit board 240.

The first printed circuit board 230 may be disposed in the housing 10. The first printed circuit board 230 may be coupled, attached, adhered, and/or fixed to the base 11. The first printed circuit board 230 may be disposed on a protrusion portion 15b of the first coil fixing part 15 protruding from the base 11.

The second printed circuit board 240 may be connected to the second coil 220. The second printed circuit board 240 may be electrically and/or physically connected to the second coil 220. The second printed circuit board 240 may transmit and receive data to and from the first printed circuit board 230. The second printed circuit board 240 may receive data from the first printed circuit board 230.

Because an induced current is generated in the second coil 220, a current may also flow in the second printed circuit board 240 electrically connected to the second coil 220. Accordingly, the second printed circuit board 240 may receive data sent from the first printed circuit board 230.

An induced current is generated in the second coil 220 due to the first coil 210, and the induced current may cause a current to flow in components or parts such as the inorganic light-emitting elements 140. Therefore, an image may be generated by emitting light from the inorganic light-emitting element 140 rotating through the induced current.

The second printed circuit board 240 may be disposed on the rotating plate 100. The second printed circuit board 240 may be coupled, attached, adhered, and/or fixed to the rotating plate 100. The second printed circuit board 240 may be disposed on a plate part 105. The plate part 105 may include the central portion 101, the circumferential portion 103, and the cover plate 173. The second printed circuit board 240 may be adhered, mounted, or coupled to the cover plate 173.

The housing 10 may include the first coil fixing part 15. The first coil fixing part 15 may protrude from the base 11 to fix the first coil 210 to the housing 10. The first coil fixing part 15 may be a first fixing protrusion 15. The first coil fixing part 15 may include an extension portion 15a and the protrusion portion 15b. The extension portion 15a may protrude from the base 11 toward the rotating plate 100. The protrusion portion 15b is formed at one end of the extension portion 15a and the first printed circuit board 230 may be disposed thereon. The first coil fixing part 15 may be formed separately from the base 11, or may be formed integrally with the base 11.

The first coil fixing part 15 may have various shapes. For example, a plurality of the first coil fixing parts 15 may be provided, and the first coil 210 may be surrounded on the outside of the plurality of first coil fixing parts 15. The first coil fixing part 15 may be formed to have an annular shape.

The rotating plate 100 may include the second coil fixing part 175. The second coil fixing part 175 may protrude from the cover plate 173 to fix the second coil 220 to the cover plate 173. The second coil fixing part 175 may be a second fixing protrusion 175. The second coil fixing part 175 may be formed separately from the cover plate 173, or may be formed integrally with the cover plate 173.

The second coil fixing part 175 may have various shapes. For example, a plurality of the second coil fixing parts 175 may be provided, and the second printed circuit board 240 may be accommodated between the plurality of second coil fixing parts 175. The second coil fixing part 175 may have an annular shape and may be formed to surround the second coil 220.

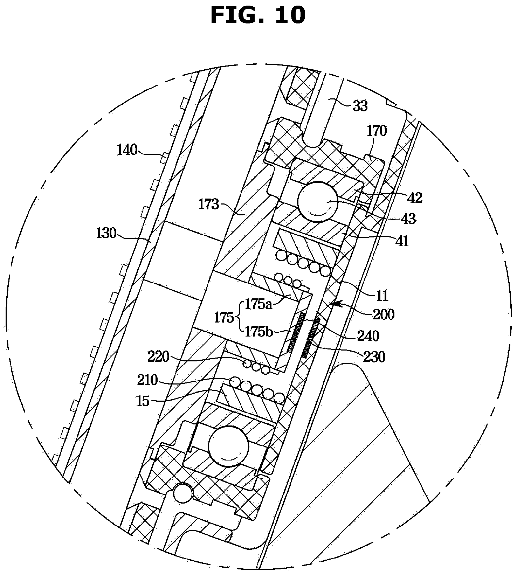

FIG. 10 is an enlarged view of the display apparatus according to an embodiment of the present disclosure.

Referring to FIG. 10, the display apparatus according to an embodiment of the present disclosure may include the wireless module 200. The wireless module 200 may transmit and receive power and data to control the inorganic light-emitting elements 140. The wireless module 200 may be disposed within the housing 10.

The same reference numerals are assigned to the same components as those in the above-described embodiments, and descriptions thereof may be omitted.

The wireless module 200 may include the first coil 210, the second coil 220, the first printed circuit board 230, and the second printed circuit board 240.

The first coil 210 may be disposed outside the second coil 220 along the radial direction R. The first coil 210 may receive a current. When the current flows in the first coil 210, an induced current may be generated in the adjacent second coil 220. The first coil 210 may be fixed to the base 11 by the first coil fixing part 15 protruding from the base 11. The first coil 210 may be disposed on the rotating plate 100 or on the inside of the first coil fixing part 15 along the radial direction R of the coil.

The second coil 220 may be disposed inside the first coil 210 along the radial direction R. When a current is applied to the first coil 210, an induced current may be generated in the second coil 220. The second coil 220 may be fixed to the rotating plate 100 by the second coil fixing part 175 protruding from the cover plate 173. The second coil 220 may be disposed on the outside of the extension portion 175a protruding from the plate part 105 to surround the extension portion 175a. The outside may be the plate part 105 or the outside of the coils 210 and 220 along the radial direction R.

The first printed circuit board 230 may be disposed in the housing 10. The first printed circuit board 230 may be coupled, attached, adhered, and/or fixed to the base 11. For example, the first printed circuit board 230 may be disposed on the protrusion portion of the first coil fixing part 15 protruding from the base 11.

The second printed circuit board 240 may be disposed on the rotating plate 100. The second printed circuit board 240 may be coupled, attached, adhered, and/or fixed to the rotating plate 100. The second printed circuit board 240 may be disposed on the protrusion portion of the second coil fixing part 175 protruding from the plate part 105.

The housing 10 may include the first coil fixing part 15. The first coil fixing part 15 may protrude from the base 11 to fix the first coil 210 to the housing 10. The first coil fixing part 15 may be the first fixing protrusion 15. The first coil fixing part 15 may include the extension portion 15a and the protrusion portion 15b. The extension portion 15a may protrude from the base 11 toward the rotating plate 100. The protrusion portion 15b is formed at one end of the extension portion 15a and the first printed circuit board 230 may be disposed thereon.

The rotating plate 100 may include the second coil fixing part 175. The second coil fixing part 175 may protrude from the cover plate 173 to fix the second coil 220 to the cover plate 173. The second coil fixing part 175 may be the second fixing protrusion 175.

The first coil fixing part 15 may have various shapes. The first coil fixing part 15 may have a hollow cylindrical shape. The first coil fixing part 15 may be formed to have an annular shape. A plurality of the first coil fixing parts 15 may be provided, and the first coil 210 may be disposed between the plurality of first coil fixing parts 15.

The second coil fixing part 175 may have various shapes. The second coil fixing part 175 may have a hollow cylindrical shape. The second coil fixing part 175 may be formed to have an annular shape. A plurality of the second coil fixing parts 175 may be provided, and the second coil 220 may be formed to surround the plurality of second coil fixing parts 175.

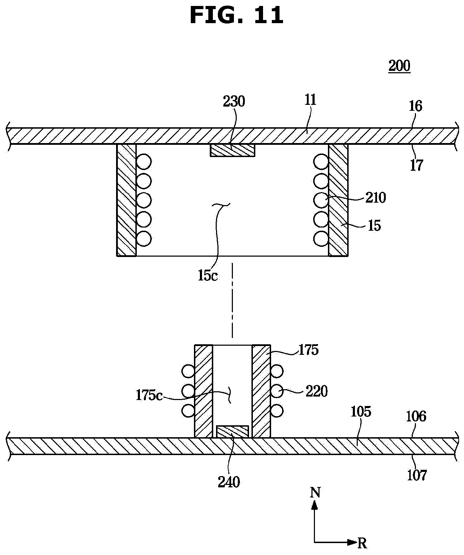

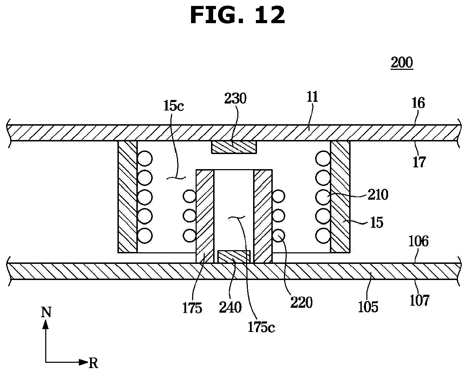

FIG. 11 is a schematic diagram of the display apparatus according to an embodiment of the present disclosure. FIG. 12 is a schematic diagram of the display apparatus according to an embodiment of the present disclosure. FIG. 11 is a schematic exploded view of the wireless module in the display apparatus according to an embodiment of the present disclosure.

Referring to FIGS. 11 and 12, the display apparatus according to an embodiment of the present disclosure may include the housing 10, the rotating plate 100, and the wireless module 200.

The housing 10 may include the base 11 and the first coil fixing part 15. The base 11 may include a first surface 16 and a second surface 17 disposed on a side opposite to the first surface 16 and facing the plate part 105.

The first coil fixing part 15 may protrude from the base 11. The first coil fixing part 15 may protrude from the second surface 17 of the base 11 toward the plate part 105. The first coil 210 may be disposed on the inside of the first coil fixing part 15 along the radial direction R. The first coil fixing part 15 may form an accommodating space 15c inside the cylindrical shape, and the first coil 210 is disposed in the accommodating space 15c and may be fixed to the housing 10 or the base 11 by the first coil fixing part 15.

The first printed circuit board 230 may be disposed in the accommodating space 15c. The first printed circuit board 230 may be disposed on the second surface 17 of the base 11. Referring to FIG. 12, the second coil 220 and the second coil fixing part 175 may be disposed in the accommodating space 15c formed inside the first coil fixing part 15.

The rotating plate 100 may include the plate part 105 and the second coil fixing part 175. The plate part 105 may include a first surface 106 facing the base 11 and a second surface 107 disposed on a side opposite to the first surface 106. As described above, the plate part 105 may include the central portion 101, the circumferential portion 103, and the cover plate 173.

The second coil fixing part 175 may protrude from the plate part 105. The second coil fixing part 175 may protrude from the first surface 106 of the plate part 105 toward the base 11. The second coil 220 may be disposed on the outside of the second coil fixing part 175 along the radial direction R. The second coil 220 may be fixed to the rotating plate 100 or the plate part 105 by the second coil fixing part 175.

The second coil fixing part 175 may form an accommodating space 175c inside the cylindrical shape. The second printed circuit board 240 may be disposed in the accommodating space 175c. The second printed circuit board 240 may be disposed on the first surface 106 of the plate part 105.

The first coil fixing part 15 may be formed separately from the base 11, or may be formed integrally with the base 11. The second coil fixing part 175 may be formed separately from the plate part 105, or may be formed integrally with the plate part 105.

The wireless module 200 may include the first coil 210, the second coil 220, the first printed circuit board 230, and the second printed circuit board 240.

The first coil 210 may be disposed outside the second coil 220 along the radial direction R. The first coil 210 may receive a current. When the current flows in the first coil 210, an induced current may be generated in the adjacent second coil 220. The first coil 210 may be fixed to the base 11 by the first coil fixing part 15.

The second coil 220 may be disposed inside the first coil 210 along the radial direction R. When a current is applied to the first coil 210, an induced current may be generated in the second coil 220. The second coil 220 may be fixed to the rotating plate 100 by the second coil fixing part 175.

The first printed circuit board 230 may be coupled, attached, adhered, and/or fixed to the base 11. The first printed circuit board 230 may be disposed on the second surface 17 of the base 11.

The second printed circuit board 240 may be coupled, attached, adhered, and/or fixed to the plate part 105. The second printed circuit board 240 may be disposed on the first surface 106 of the plate part 105. The second printed circuit board 240 may be accommodated in the accommodating space 175c formed inside the second coil fixing part 175.

The above-described embodiments exemplify that the base 11 is fixed and the rotating plate 100 rotates. However, the embodiments of the present disclosure are not limited thereto, and regardless of whether the base 11 or the rotating plate 100 is fixed or rotated, power and data may be transmitted and received in the wireless module 200. The base 11 may rotate or the plate part 105 may be fixed.

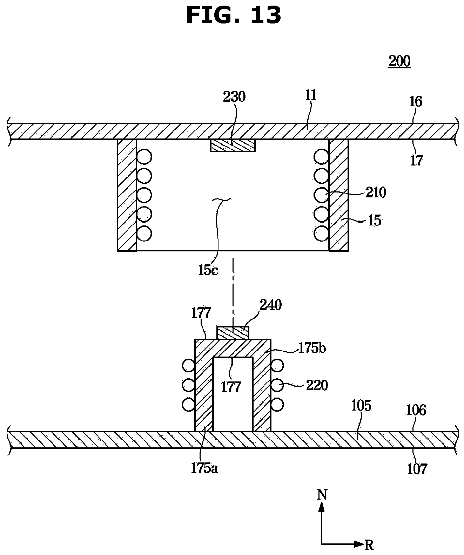

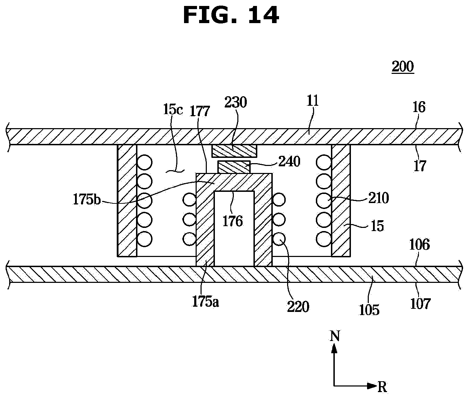

FIG. 13 is a schematic diagram of the display apparatus according to an embodiment of the present disclosure. FIG. 14 is a schematic diagram of the display apparatus according to an embodiment of the present disclosure. FIG. 13 is a schematic exploded view of the wireless module 200 in the display apparatus according to an embodiment of the present disclosure.

Referring to FIGS. 13 and 14, the rotating plate 100 may include the plate part 105 and the second coil fixing part 175. The second coil fixing part 175 may include the extension portion 175a extending from the plate part 105 toward the base 11, and a protrusion portion 175b provided at one end of the extension portion 175a to be adjacent to the base 11.

The protrusion portion 175b may include a first surface 176 and a second surface 177. The first surface 176 may face the base 11, and the second surface 177 may be provided on a side opposite to the first surface 176. The second printed circuit board 240 may be disposed on the first surface 176. The second printed circuit board 240 may be coupled, attached, adhered, and/or fixed to the second surface 177 of the protrusion portion 175b. Accordingly, the first printed circuit board 230 and the second printed circuit board 240 may be disposed adjacent to each other to transmit and receive data.

Referring to FIG. 14, the second coil 220, the second coil fixing part 175, and the second printed circuit board 240 may be disposed in the accommodating space 15c.

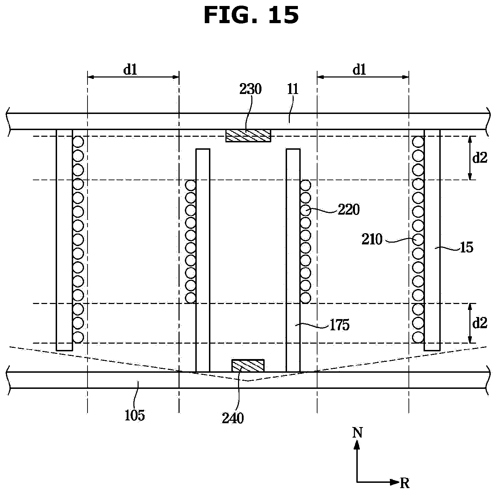

FIG. 15 is a schematic diagram of the display apparatus according to an embodiment of the present disclosure.

Referring to FIG. 15, the display apparatus according to one embodiment may include the base 11, the plate part 105, and the wireless module 200. The base 11 and the plate part 105 may rotates or may not rotate, respectively. The base 11 may be fixed and not rotate, and the plate part 105 may rotate. On the other hand, the base 11 may rotate, and the plate part 105 may be fixed and not rotate. Also, both the base 11 and the plate part 105 may rotate or neither may rotate.

The first coil 210 and the second coil 220 may be spaced apart from each other. The first coil 210 and the second coil 220 may be spaced apart by a predetermined distance d1 along the radial direction R. The second coil 220 may be disposed inside the first coil 210 along the radial direction R.

The first coil 210 may be provided in a larger size than the second coil 220. The first coil 210 may be formed to have a predetermined thickness (2*d2) thicker than the second coil 220 along a direction N in which the base 11 and the plate part 105 are spaced apart. The first coil 210 may be formed to have the predetermined thickness (2*d2) thicker than the second coil 220 along a rotation axis direction N. A length of an upper d2 and a length of a lower d2 illustrated in FIG. 15 may be different.

As at least one of the base 11 and the plate part 105 rotates, vibration may occur. For example, as at least one of the base 11 and the plate part 105 rotates, the at least one of the base 11 and the plate part 105 may move in the radial direction R or in the rotation axis direction N. When the first coil 210 and the second coil 220 have substantially the same size, the second coil 220 may deviate from the first coil 210 when the vibration becomes excessive. In this case, in order to prevent power from being transmitted smoothly from the first coil 210 to the second coil 220, the first coil 210 may be provided to have a larger size than the second coil 220 so that the first coil 210 surrounds the second coil 220.

When the vibration becomes excessive, because the first coil 210 and the second coil 220 may collide in a case in which the first coil 210 and the second coil 220 are not spaced apart from each other, the first coil 210 and the second coil 220 may be spaced apart from each other by the predetermined distance d1 along the radial direction R.

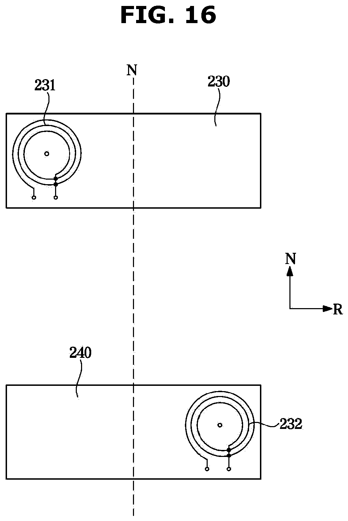

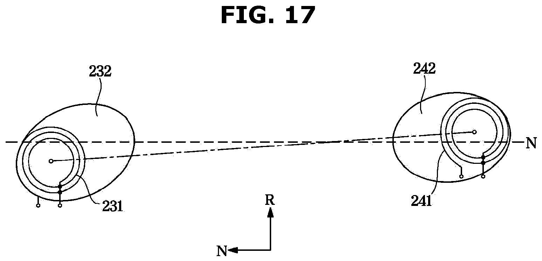

FIG. 16 is a schematic diagram of the display apparatus according to an embodiment of the present disclosure. FIG. 17 is a schematic diagram of the display apparatus according to an embodiment of the present disclosure.

Referring to FIGS. 16 and 17, in the display apparatus according to an embodiment of the present disclosure, the wireless module 200 may include the first printed circuit board 230 and the second printed circuit board 240. The first printed circuit board 230 and the second printed circuit board 240 may be disposed on a rotation axis of the base 11 or the plate part 105.

The first printed circuit board 230 may include a first circuit pattern 231, and the second printed circuit board 240 may include a second circuit pattern 241.

The first circuit pattern 231 may be a first communication circuit pattern 231 to allow the first printed circuit board 230 and the second printed circuit board 240 to transmit and receive data, and the second circuit pattern 241 may be a second communication circuit pattern 241 to allow the first printed circuit board 230 and the second printed circuit board 240 to transmit and receive data.

The first circuit pattern 231 may be formed within the first printed circuit board 230 to be spaced apart from the rotation axis. The second circuit pattern 241 may also be formed within the second printed circuit board 240 to be spaced apart from the rotation axis. The first circuit pattern 231 and the second circuit pattern 241 may be spaced apart from the rotation axis in different directions. However, the first circuit pattern 231 and the second circuit pattern 241 may be spaced apart from the rotation axis in the same direction.

As the first printed circuit board 230 and the second printed circuit board 240 transmit and receive data to each other, the first circuit pattern 231 and the second circuit pattern 241 may radiate electromagnetic waves. For example, as illustrated in FIG. 17, the first circuit pattern 231 may form a first radiation pattern 232, and the second circuit pattern 241 may form a second radiation pattern 242. Also, the first radiation pattern 232 and the second radiation pattern 242 may be formed such that an intensity of each of the pattern 232 and 242 direct to the rotation axis.

In one embodiment of the present disclosure, the first circuit pattern 231 and the second circuit pattern may be arranged such that a position of the maximum radiation intensity of the first radiation pattern 232 and a position of the maximum radiation intensity of the second radiation pattern 242 are disposed on the rotation axis.

The first printed circuit board 230 and the second printed circuit board 240 are positioned on the rotation axis of the base 11 or the plate part 105. However, in a case in which the position of the maximum radiation intensity of the first radiation pattern 232 and the position of the maximum radiation intensity of the second radiation pattern 242 may be disposed on the rotation axis, the arrangement positions of the first printed circuit board 230 and the second printed circuit board 240 are not limited to the above example.

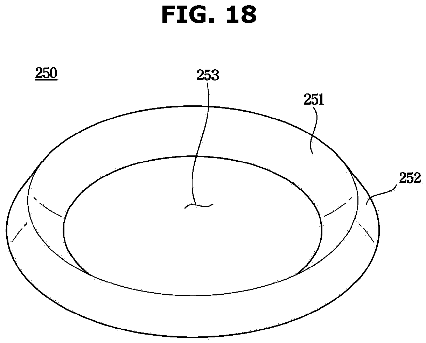

FIG. 18 is a perspective view of a shielding member in the display apparatus according to an embodiment of the present disclosure.

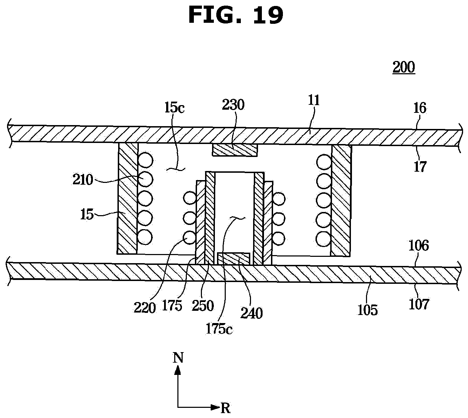

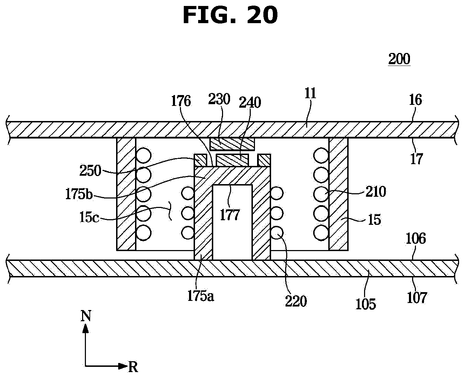

Referring to FIG. 18, in the display apparatus according to one embodiment, the wireless module 200 may include a shielding member 250. The shielding member 250 may accommodate a printed circuit board therein. For example, referring to FIGS. 19 and 20, the second printed circuit board 240 may be disposed inside the shielding member 250. The shielding member 250 may block interference from external electromagnetic waves introduced into the second printed circuit board 240.

The shielding member 250 may have a cylindrical shape. The shielding member 250 may also have a ring shape. The shielding member 250 may include a hollow portion 253 and an inner surface 251 and an outer surface 252 forming the hollow portion 253. The inner surface 251 and the outer surface 252 may be formed to be inclined. However, the shape of the shielding member 250 is not limited to the above examples. For example, in a case in which the shielding member 250 is formed in a cylindrical shape and the second printed circuit board 240 is disposed in the hollow portion 253, holes penetrating the cylindrical wall (the inner surface 251 and outer surface 252) may be formed in order for the electromagnetic waves generated in the first circuit pattern 231 to pass therethrough.

FIG. 19 is a schematic diagram of the display apparatus according to an embodiment of the present disclosure.

Referring to FIG. 19, the shielding member 250 may be disposed on the inside of the second coil 220 along the radial direction R. The shielding member 250 may extend along the rotation axis direction N of the base 11 or the plate part 105.

The shielding member 250 may be disposed within the accommodating space 175c of the second coil fixing part 175. The shielding member 250 may be provided to surround the second printed circuit board 240. The second printed circuit board 240 may be provided inside the shielding member 250. The shielding member 250 may block interference from external electromagnetic waves introduced into the second printed circuit board 240.

FIG. 20 is a schematic diagram of the display apparatus according to an embodiment of the present disclosure.

Referring to FIG. 20, the shielding member 250 may be disposed on the inside of the second coil 220 along the radial direction R. The shielding member 250 may extend along the rotation axis direction N of the base 11 or the plate part 105.

The shielding member 250 may be disposed on the second coil fixing part 175. The shielding member 250 may be disposed on the second surface 177 of the protrusion portion 175b. The shielding member 250 may be provided to surround the second printed circuit board 240 so that the second printed circuit board 240 is provided inside the shielding member 250. The shielding member 250 may block interference from external electromagnetic waves introduced into the second printed circuit board 240.

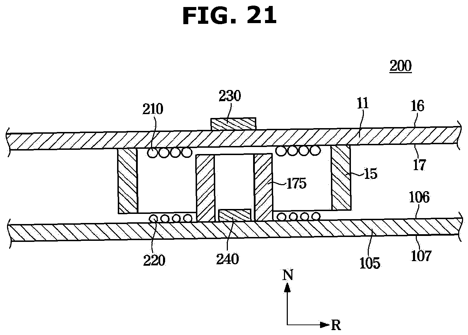

FIG. 21 is a schematic diagram of the display apparatus according to an embodiment of the present disclosure.

Referring to FIG. 21, the display apparatus according to an embodiment of the present disclosure may include the housing 10, the rotating plate 100, and the wireless module 200. The wireless module 200 may include the first coil 210, the second coil 220, the first printed circuit board 230, and the second printed circuit board 240.

The first coil 210 may be disposed on the base 11. The first coil 210 may be coupled, attached, adhered, and/or fixed to the second surface of the base 11. The first coil 210 may receive a current. When the current flows in the first coil 210, an induced current may be generated in the adjacent second coil 220.

The second coil 220 may be disposed on the first surface 106 of the plate part 105. The second coil 220 may be coupled, attached, adhered, and/or fixed to the first surface 106 of the plate part 105.

The first printed circuit board 230 may be disposed on the first surface 16 of the base 11 and coupled, attached, adhered, and/or fixed to the first surface 16 of the base 11. However, the present disclosure is not limited thereto, and unlike illustrated in the drawing, the first printed circuit board 230 may be disposed on the second surface 17 of the base 11.

The second printed circuit board 240 may be coupled, attached, adhered, and/or fixed to the plate part 105. The second printed circuit board 240 may be disposed on the first surface 106 of the plate part 105. The second printed circuit board 240 may also be accommodated in the accommodating space 175c formed inside the second coil fixing part 175.

The foregoing has illustrated and described specific embodiments. However, it should be understood by those of skilled in the art that the present disclosure is not limited to the above-described embodiments, and various changes and modifications may be made without departing from the technical idea of the present disclosure described in the following claims.

## Claims

1. A display apparatus comprising:
a housing comprising a base;
a motor coupled to the base;
a rotating plate disposed on one side of the base;
a substrate disposed on the rotating plate and on which inorganic light-emitting elements of a bar shape extending in a radial direction from a center of the rotating plate are mounted; and
a wireless module provided in the housing, the wireless module being configured to transmit and receive power and data to control the inorganic light-emitting elements,
wherein the wireless module comprises:
a first coil; and
a second coil disposed inside the first coil or to surround the first coil to generate an induced current due to the current flowing in the first coil.

2. The display apparatus according to claim 1, wherein
the housing comprises a coil fixing part provided to fix at least one of the first coil and the second coil to the base.

3. The display apparatus according to claim 2, wherein
the coil fixing part is a first coil fixing part, and
the rotating plate comprises:
a plate part; and
a second coil fixing part provided to fix at least one of the first coil and the second coil to the rotating plate.

4. The display apparatus according to claim 3, wherein
the first coil fixing part protrudes from the base toward the rotating plate so that the first coil is fixed to the housing.

5. The display apparatus according to claim 4, wherein
the second coil fixing part protrudes from the plate part toward the base so that the second coil is fixed to the rotating plate.

6. The display apparatus according to claim 5, wherein
the first coil and the second coil have an annular shape, and
the second coil is disposed inside the first coil along a radial direction of the first coil to be surrounded by the first coil.

7. The display apparatus according to claim 6, wherein
the base and the plate part are spaced apart in one direction, and
wherein a thickness of the first coil along the one direction is provided to be thicker than a thickness of the second coil along the one direction.

8. The display apparatus according to claim 7, wherein
the wireless module comprises:
a first printed circuit board disposed on the base, connected to the first coil and comprising a first communication circuit pattern; and
a second printed circuit board connected to the second coil, disposed on the rotating plate to be spaced apart from the first printed circuit board, and comprising a second communication circuit pattern.

9. The display apparatus according to claim 8, wherein
the first printed circuit board and the second printed circuit board are disposed on a rotation axis of the rotating plate.

10. The display apparatus according to claim 9, wherein
the first communication circuit pattern and the second communication circuit pattern are spaced apart from the rotation axis of the rotating plate along the radial direction of the rotating plate.

11. The display apparatus according to claim 10, wherein
the first communication circuit pattern is spaced apart from the rotation axis of the rotating plate along a first direction, and
wherein the second communication circuit pattern is spaced apart from the rotation axis of the rotating plate along a second direction different from the first direction.

12. The display apparatus according to claim 11, wherein
the second printed circuit board is disposed inside the second coil along the radial direction of the rotating plate, and
wherein the wireless module further comprises a shielding member disposed inside the second coil to cover the second printed circuit board.

13. The display apparatus according to claim 12, wherein
the second coil fixing part comprises:
an extension portion extending from the plate part toward the base; and
a protrusion portion provided at one end of the extension portion to be adjacent to the base and on which the second printed circuit board is disposed.

14. The display apparatus according to claim 13, wherein
the protrusion portion comprises:
a first surface provided to face the plate part; and
a second surface provided on a side opposite to the first surface to face the base, and
wherein the second printed circuit board and the shielding member are disposed on the second surface.

15. The display apparatus according to claim 12, wherein
the second coil fixing part comprises:
an extension portion extending from the plate part toward the base; and
an accommodating space formed by the extension portion to accommodate the second printed circuit board.
